# DEMANDE DE BREVET EUROPEEN

(11) **EP 3 594 126 A1**
(43) Date de publication de la demande: **15.01.2020**
(21) Numéro de dépôt: 19185099.9
(22) Date de dépôt: 09.07.2019
(51) Int. Cl.: B64D 33/02, B64F 5/10, B64D 29/08

(54) **ENTREE D'AIR, NACELLE ET ENSEMBLE PROPULSIF D'AERONEF A SECTEURS MONOBLOCS**

(30) Priorité: 10.07.2018 FR 1856337
(71) Demandeur: Airbus Operations, 31060 Toulouse (FR)
(72) Inventeur: PORTE, Alain, 31770 Colomiers (FR); PONS, François, 31700 Daux (FR); BOURHIS, Arnaud, 31830 Plaisance du Touch (FR); SENTIER, Julien, 31770 Colomiers (FR)
(74) Mandataire: Santarelli

(57) **Abrégé**

L'invention concerne une entrée d'air de nacelle d'aéronef comprenant des secteurs (1) comportant chacun une portion formant lèvre (12), une portion formant panneau externe (11) et une portion formant panneau interne (13). Les portions formant panneau externe (11) et formant lèvre (12) sont réalisées par une paroi continue (10) d'un seul tenant. De plus, à au moins une jonction entre deux secteurs adjacents, une ouverture et une trappe sont prévues entre les portions formant panneaux externes (11) desdits secteurs, tandis que les portions formant panneau interne (13) et les portions formant lèvre (12) des secteurs en question sont bord à bord et fixés entre elles par des fixations (14, 21) accessibles depuis l'intérieur des secteurs et invisibles depuis l'extérieur des secteurs. La suppression des lignes de fixations orbitales entre lèvre et panneaux externes et des lignes de fixation longitudinales entre secteurs limite considérablement la traînée. En outre, la conception de l'entrée d'air permet, dans le cadre des opérations de maintenance, de traiter les secteurs (1) comme des entités monoblocs. L'invention concerne aussi un procédé de maintenance dans lequel, lorsqu'une zone d'un secteur est endommagée, le secteur concerné est intégralement déposé et est remplacé par un secteur neuf ou « recyclé ». La zone endommagée peut ensuite être réparée en temps masqué, alors que l'aéronef est remis en service sans délai.

## Description

L'invention concerne un ensemble propulsif pour aéronef, plus précisément une nacelle d'un tel ensemble propulsif, et plus précisément encore une entrée d'air de nacelle d'aéronef.

De façon conventionnelle, une nacelle d'aéronef comprend, de l'avant vers l'arrière, un premier tronçon en amont du flux aérodynamique, appelé entrée d'air, un deuxième tronçon qui recouvre le carter de la soufflante moteur, appelé capot de soufflante, et un troisième tronçon qui présente généralement une zone d'inversion de poussée qui entoure le corps de turbine du moteur à l'aval du flux aérodynamique.

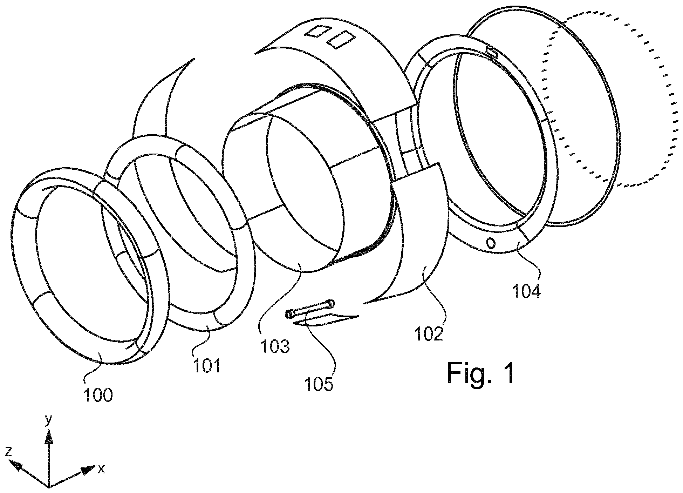

Une entrée d'air, telle celle illustrée à la figure 1 annexée, comprend usuellement des éléments de structure tels qu'un cadre avant 101 et un cadre arrière 104, ainsi que, de l'avant vers l'arrière de la nacelle, une lèvre 100 portée par le cadre avant, des panneaux externes 102 prolongeant la lèvre à l'extérieur de la nacelle (et formant une paroi externe de l'entrée d'air), des panneaux internes 103 prolongeant la lèvre à l'intérieur de la nacelle et formant une paroi interne de l'entrée d'air délimitant un conduit intérieur permettant de canaliser l'air en direction du moteur, les panneaux externes et internes étant portés par le cadre avant et le cadre arrière.

La forme de l'entrée d'air et/ou les systèmes dont elle est équipée doivent permettre d'éviter la formation et/ou l'accumulation de glace ou givre, de limiter l'impact des nuisances sonores (à cette fin, les panneaux internes 103 sont des panneaux acoustiques), d'assurer une fonction aérodynamique et de prévenir la pénétration d'oiseaux dans le compartiment de soufflante contenant les systèmes moteurs.

Le dégivrage de l'entrée d'air est assuré par la provision de tubes longitudinaux de dégivrage 105 amenant de l'air chaud depuis le moteur jusqu'au conduit à section en D que forment le cadre avant 101 et la lèvre 100.

La fixation de la lèvre, des panneaux internes et des panneaux externes sur le cadre avant est obtenue par au moins deux lignes de rivets (une ligne externe et une ligne interne), qui forment des coutures orbitales qui provoquent des perturbations tôt dans le profil aérodynamique et augmentent la traînée.

En outre, le nombre de pièces constituant l'entrée d'air rend son assemblage complexe et engendre des procédures de maintenance et de réparation difficiles à mettre en oeuvre (certaines pièces sont difficiles d'accès et il faut souvent démonter de nombreuses pièces pour pouvoir changer celle défectueuse ou endommagée).

Les solutions actuelles pour réduire l'impact des coutures orbitales sur les flux aérodynamiques et pour simplifier la fabrication et la réparation des entrées d'air consistent essentiellement à limiter le nombre de secteurs constituant la lèvre (entre 3 et 5 seulement) et le nombre de panneaux externes et de panneaux internes de l'entrée d'air. Ces solutions ne réduisent que partiellement les problèmes constatés et trouvent leur limite avec l'augmentation du diamètre des nacelles.

L'invention vise à fournir une entrée d'air de conception simplifiée, qui permet de faciliter les opérations de maintenance et d'en réduire les coûts, et dont l'impact sur les flux aérodynamiques et sur la traînée est moindre.

Pour ce faire, l'invention propose une entrée d'air de nacelle d'aéronef comprenant :
- des secteurs comportant chacun une portion formant lèvre, une portion formant panneau externe et une portion formant panneau interne,
- des jonctions entre les secteurs.

L'entrée d'air selon l'invention est caractérisée en ce que :
- les secteurs sont fixés entre eux par des fixations démontables accessibles depuis l'intérieur des secteurs,
- à au moins une jonction entre deux secteurs, une ouverture d'accès, permettant l'accès à l'intérieur des secteurs, est prévue entre les portions formant panneau externe desdits secteurs,
- chaque ouverture d'accès est comblée par une trappe amovible qui présente une face externe affleurant et prolongeant la face externe des portions formant panneau externe des deux secteurs qui délimitent l'ouverture d'accès.

L'intérêt principal de l'invention est que chaque secteur peut être considéré comme étant un secteur « monobloc » et traité comme tel dans le cadre des opérations de maintenance sur l'entrée d'air. Il est en effet possible de déposer intégralement un secteur, en retirant l'une des trappes d'accès selon l'invention pour pouvoir accéder aux fixations qui relient le secteur à déposer aux deux secteurs qui l'entourent puis en retirant ces fixations.

Dès lors, lorsqu'une zone d'un secteur est endommagée de quelque manière que ce soit, il suffit de retirer le secteur entier et de le remplacer par un secteur neuf ou « recyclé » (ancien secteur ayant subi une réparation et désormais prêt à l'emploi). La zone de secteur endommagée peut ensuite être réparée pour une utilisation ultérieure du secteur ainsi recyclé, alors que l'aéronef est remis en service sans délai. Le temps d'immobilisation d'un aéronef en raison d'un dommage survenu sur une nacelle est ainsi considérablement réduit, de même que les coûts de maintenance.

L'invention s'étend à un procédé de maintenance d'une entrée d'air telle que précédemment définie ayant subi un dommage sur une zone de l'un de ses secteurs, caractérisé en ce que :
- le secteur endommagé est intégralement déposé ; pour ce faire, l'une des trappes de l'entrée d'air est retirée pour accéder aux fixations reliant le secteur endommagé aux deux secteurs qui l'entourent, lesquelles fixations sont ensuite retirées ; si l'entrée d'air comporte une trappe fixée au secteur endommagé, c'est précisément cette trappe qui est retirée pour accéder aux fixations susmentionnées, le retrait de la trappe permettant de désolidariser la portion formant panneau externe du secteur endommagé du reste de l'entrée d'air ; si aucune trappe n'est fixée au secteur endommagé, la trappe à retirer est celle offrant l'accès le plus facile aux fixations à retirer,
- un secteur neuf ou recyclé est installé en lieu et place du secteur endommagé précédemment retiré.

Le secteur endommagé peut ensuite être réparé (la zone endommagée est réparée ou changée) en temps masqué, aux fins de recyclage, ou être éventuellement détruit si aucune réparation n'est possible, tandis que l'aéronef est immédiatement remis en service.

Un autre intérêt de l'invention est qu'il est possible de prévoir des fixations entre secteurs dépourvues de parties saillantes à l'extérieur des secteurs, voire des fixations intégralement logées à l'intérieur des secteurs (et donc totalement invisibles du point de vue aérodynamique), puisque celles-ci sont accessibles depuis l'intérieur des secteurs. En conséquence, les zones dans lesquelles une performance de laminarité naturelle est recherchée sont soit dépourvues de fixations soit dotées uniquement de fixation invisibles. Par ailleurs, pour la fixation des trappes aux secteurs, qui nécessite des fixations accessibles depuis l'extérieur de la nacelle, il est possible de prévoir des fixations presque invisibles du point de vue aérodynamique, par exemple des vis à têtes noyées dans l'épaisseur de la trappe.

Selon une caractéristique possible de l'invention, une ouverture d'accès fermée par une trappe est prévue à chaque jonction entre secteurs. En variante, une ouverture d'accès fermée par une trappe est prévue à une jonction sur deux de l'entrée d'air. Au niveau d'une jonction dépourvue d'ouverture d'accès, les portions formant panneau externe des deux secteurs délimitant la jonction présentent des bords longitudinaux en contact, qui peuvent être fixés entre eux par des fixations identiques ou similaires à celles qui relient entre elles les portions formant lèvre (ou les portions formant panneau interne) desdits secteurs.

Plusieurs modes de réalisation peuvent être envisagés pour les fixations reliant les secteurs entre eux.

Selon un premier mode de réalisation, la portion formant lèvre et la portion formant panneau interne de chaque secteur présentent des bords longitudinaux opposés qui sont pourvus de brides de fixation latérales s'étendant radialement vers l'intérieur du secteur, lesquelles brides de fixation latérales sont percées de trous de réception d'attaches pour la fixation dudit secteur à deux secteurs adjacents. Dans ce premier mode de réalisation, les moyens de fixation entre les secteurs au niveau des portions formant lèvre et des portions formant panneau interne sont donc intégralement logés à l'intérieur des secteurs, ce qui est rendu possible par la présence des trappes d'accès selon l'invention.

Selon une caractéristique possible de l'invention, l'entrée d'air comprend entre deux et douze secteurs tels que précédemment définis selon la taille du moteur, voire entre quatre et douze secteurs, avec une préférence pour six secteurs.

Selon une caractéristique possible de l'invention, chaque trappe est fixée de façon amovible aux portions formant panneaux externes des deux secteurs adjacents qui entourent la trappe à l'aide d'éclisses s'étendant à cheval sous lesdites portions formant panneaux externes et sous ladite trappe.

En variante, chaque bord longitudinal ou transversal délimitant une ouverture d'accès présente un rebord aminci sur lequel vient reposer la trappe fermant ladite ouverture. En d'autres termes, cette variante est dépourvue d'éclisses pour la fixation de la trappe sur les secteurs qui l'entourent.

Concernant la longueur (selon la direction longitudinale) des ouvertures d'accès et trappes associées, deux modes de réalisation principaux sont prévus.

Selon un premier mode de réalisation, l'ouverture d'accès et la trappe associée s'étendent sur toute la longueur des portions formant panneau externe des secteurs adjacents qui délimitent l'ouverture. La trappe est alors qualifiée de trappe longue. Dans ce premier mode de réalisation, les portions formant panneau interne et formant lèvre d'un même secteur présentent des bords longitudinaux coplanaires. Lorsque les secteurs sont accolés, les bords longitudinaux des portions formant lèvre (respectivement des portions formant panneau interne) des deux secteurs sont donc en contact. A l'inverse, les portions formant panneau externe des secteurs présentent des bords longitudinaux « en retrait » par rapport aux bords longitudinaux des deux autres portions.

Selon le second mode de réalisation, l'ouverture d'accès et la trappe ne s'étendent que sur une partie de la longueur des portions formant panneau externe des secteurs qui délimitent l'ouverture. La trappe est alors qualifiée de trappe courte. Dans ce second mode de réalisation, les portions formant panneau interne et formant lèvre des secteurs présentent des bords longitudinaux coplanaires comme précédemment expliqué pour le premier mode de réalisation, tandis que les bords longitudinaux de la portion formant panneau externe des secteurs présentent une partie en retrait, un décrochement et une partie en contact avec le bord longitudinal du secteur adjacent, cette dernière partie pouvant être munie d'une bride de fixation à l'instar des portions formant lèvre et formant panneau interne. De préférence, la trappe courte s'étend depuis l'extrémité avant de la portion formant panneau externe jusqu'à un point intermédiaire entre les extrémités avant et arrière de ladite portion.

Une entrée d'air selon l'invention peut comprendre uniquement des trappes courtes, uniquement des trappes longues ou éventuellement une combinaison de trappes longues et courtes.

Dans une version remarquable de l'invention, les secteurs comportent chacun une paroi continue d'un seul tenant dans laquelle sont formées la portion formant panneau externe et la portion formant lèvre du secteur. Dans cette version, la ligne de fixations orbitale entre la lèvre et les panneaux externes des entrées d'air antérieures est donc supprimée. La traînée est ainsi considérablement réduite.

De façon classique, la portion formant panneau interne de chaque secteur comporte une peau arrière et un doublage acoustique.

Selon une caractéristique possible de la version remarquable susmentionnée de l'invention, la paroi continue du secteur (qui constitue la portion formant panneau externe et la portion formant lèvre du secteur) se prolonge pour former également la peau arrière de la portion formant panneau interne. Le doublage acoustique recouvre au moins partiellement cette peau arrière ; il comprend une peau résistive apte à absorber des ondes acoustiques et une âme apte à amortir lesdites ondes, la peau résistive et l'âme étant configurées de façon à ce que la peau résistive affleure au niveau de la portion formant lèvre de la paroi continue du secteur.

Ainsi, non seulement le secteur comprend une paroi continue monobloc mais de plus il intègre toutes les fonctions habituelles de l'entrée d'air (lèvre de séparation des flux, panneau externe, panneau interne, isolation thermo-acoustique, etc.) dans une conception extrêmement simplifiée.

Le doublage acoustique peut être formé en même temps que la paroi continue monobloc, lors d'une même étape de fabrication. En variante, des plaques de doublage sont collées, lors d'une étape ultérieure, sur la paroi continue monobloc préalablement formée. Une fabrication en une seule étape, à un seul poste, est préférée.

Selon une caractéristique possible de l'invention, chaque secteur intègre des organes de dégivrage électrique, de préférence dans l'épaisseur de sa paroi continue monobloc.

L'invention s'étend à une nacelle, un ensemble propulsif et un aéronef ayant une entrée d'air selon l'invention.

Selon une caractéristique possible de l'invention dans sa version remarquable, la paroi continue monobloc de chaque secteur de l'entrée d'air est fixée à un cadre arrière par une première ligne de fixations, par exemple une ligne de rivets (d'autres fixations étant possibles). La paroi continue monobloc de chaque secteur de l'entrée d'air est aussi fixée à une bride moteur par une seconde ligne de fixations (par exemple des boulons).

Selon une caractéristique possible de l'invention dans sa version remarquable, la paroi continue monobloc de chaque secteur est en un matériau composite thermoplastique, de préférence un carbone thermoplastique, c'est-à-dire un matériau à base de fibres de carbone et d'une résine thermoplastique, par exemple une résine thermoplastique à hautes performances telle qu'un PEEK (Polyétheréthercétone), un PPS (polyphenylsulfone), un PEI (polyétherimide), un PEKK (Polyéthercétonecétone), etc. Il peut aussi s'agir d'un matériau à base de fibres de verre ou un matériau mixte à base de fibres de carbone et de verre.

En variante, la paroi continue monobloc est en un matériau composite thermodurcissable.

En variante, elle comprend au moins une zone (qui peut être l'une de ses portions précédemment définies ou une seulement une partie d'une telle portion) en matériau thermodurcissable et au moins une zone (qui peut être l'une de ses portions précédemment définies ou une seulement une partie d'une telle portion) en matériau thermoplastique.

La paroi continue des secteurs peut également être en un matériau hybride combinant métal et matériau composite. La paroi peut être formée de plusieurs couches de matériaux différents assemblés par collage ou éventuellement par rivets fraisés invisibles du point de vue aérodynamique.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
- La figure 1 est une vue schématique en perspective éclatée d'une entrée d'air de l'art antérieur.

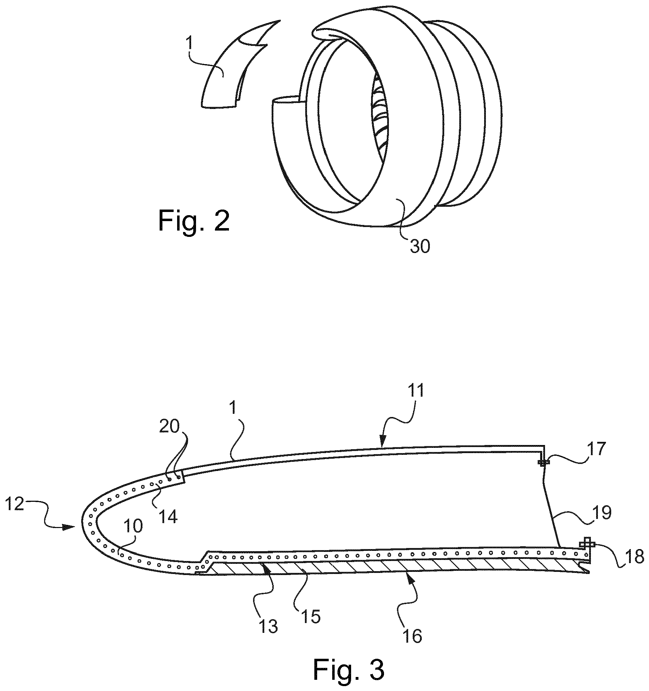

- La figure 2 est une vue schématique en perspective d'une entrée d'air selon l'invention dont un secteur est détaché.
- La figure 3 est une vue schématique de profil d'un secteur d'une entrée d'air selon l'invention selon une forme de réalisation.
- La figure 4 est une vue de dos d'un mode de réalisation d'une entrée d'air selon l'invention dont les secteurs sont ceux de la figure 3.
- La figure 5 est une vue en perspective d'une partie de l'entrée d'air de la figure 4 à la jonction entre deux secteurs.

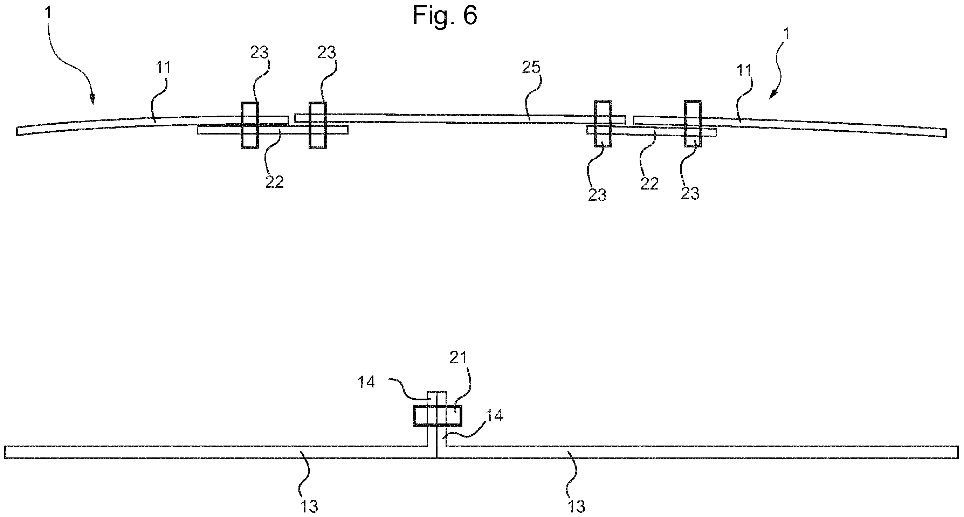

- La figure 6 est une vue en coupe transversale de l'entrée d'air des figures 5 et 6.

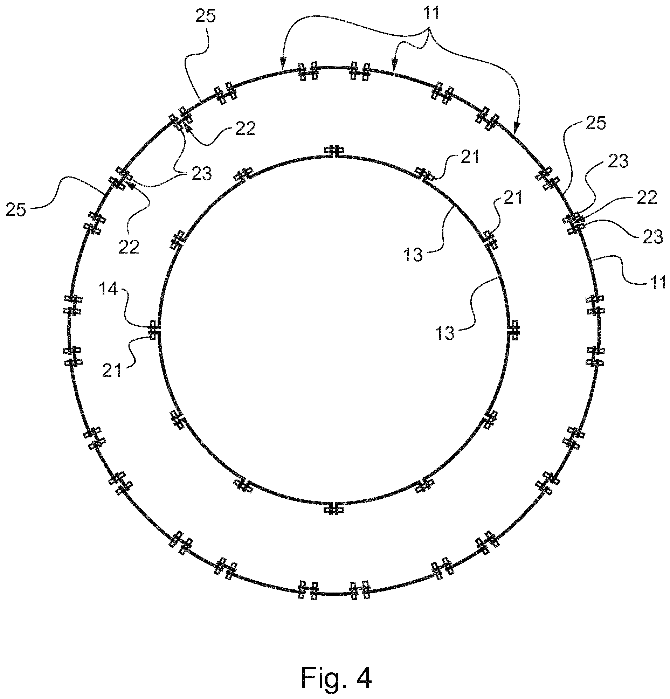

L'entrée d'air selon l'invention illustrée sur les figures annexées est essentiellement composée d'une pluralité de secteurs 1, dits secteurs monoblocs, par exemple de douze secteurs monoblocs 1 comme illustré à la figure 4. En variante, elle peut ne comprendre que six secteurs monoblocs ou un nombre encore inférieur de secteurs monoblocs.

Chaque secteur monobloc 1 comprend selon une forme de réalisation une paroi continue monobloc 10 comprenant une portion 12 formant lèvre, une portion 11 formant panneau externe et une portion 13 formant panneau interne. Par soucis de simplicité, la référence 13 désigne à la fois la portion formant panneau interne du secteur monobloc et la portion de paroi monobloc formant la peau arrière de ladite portion formant panneau interne.

Chaque secteur monobloc 1 est fixé à un cadre arrière 19 par une première ligne de fixations (rivets) 17 à l'extrémité arrière de la portion 11 formant panneau externe de sa peau continue monobloc. Il est de plus fixé à une bride moteur (non représentée) par une seconde ligne de fixations 18 à l'extrémité arrière de la portion 13 formant panneau interne de sa peau continue monobloc.

La portion 13 formant panneau interne du secteur monobloc 1 comprend un doublage acoustique 15 qui recouvre la peau arrière et dont la face visible 16 est micro-perforée pour pouvoir absorber les ondes sonores. Le doublage acoustique est de préférence formé en même temps que la paroi continue monobloc 10.

Chaque secteur monobloc 1 présente, à chacun de ses bords longitudinaux, une bride de fixation latérale 14 qui fait saillie radialement vers l'intérieur du secteur monobloc et qui est percée de trous 20 pour la fixation du secteur monobloc à un secteur monobloc adjacent à l'aide d'attaches 21. Cette bride de fixation latérale n'est présente que le long des portions formant lèvre 12 et formant panneau interne 13 des secteurs.

La portion formant panneau externe 11 est dépourvue de bride latérale. En outre, les différentes portions du secteur monobloc sont dimensionnées de façon à ce que, lorsque deux secteurs monoblocs sont mis côte à côte et que les brides de fixation latérales 14 des portions formant lèvre et formant panneau interne desdits secteurs sont en contact, un espace demeure entre les bords longitudinaux des portions formant panneau externe. Cet espace entre les portions formant panneau externe des deux secteurs adjacents définit une ouverture qui permet d'accéder facilement aux brides de fixation latérales 14 des deux autres portions pour la mise en place ou le retrait des attaches 21. Cette ouverture est comblée par une trappe 25 qui est fixée aux portions formant panneau externe 11 des deux secteurs adjacents à l'aide d'éclisses longitudinales 22 et d'attaches 23. Chaque éclisse longitudinale peut être remplacée par un épaulement formé tout le long du bord longitudinal de la portion formant panneau externe du secteur monobloc, épaulement sur lequel viendrait reposer la trappe 25 (dans cette variante, il ne reste plus que deux lignes d'attaches 23 -au lieu de quatre- à chaque jonction entre secteurs monoblocs autour de la trappe).

Pour démonter l'entrée d'air lors d'une opération de maintenance, la trappe 25 est retirée pour pouvoir facilement accéder aux attaches 21.

La trappe 25 présente une face externe lisse qui affleure et prolonge la face externe des secteurs monoblocs 1 de façon à limiter les perturbations aérodynamiques. Les lignes de fixation 23 s'étendant dans des plans longitudinaux (plans contenant l'axe de l'entrée d'air), elles n'ont que peu d'impact sur les flux aérodynamiques (contrairement aux coutures orbitales formées par les fixations reliant les panneaux externes -ou internes- aux secteurs de lèvre dans les entrées d'air antérieures connues). En outre, il est possible de prévoir des fixations 23 dont la tête est noyée dans l'épaisseur de paroi de la trappe, afin de limiter plus encore, voire supprimer, l'impact aérodynamique de ces fixations.

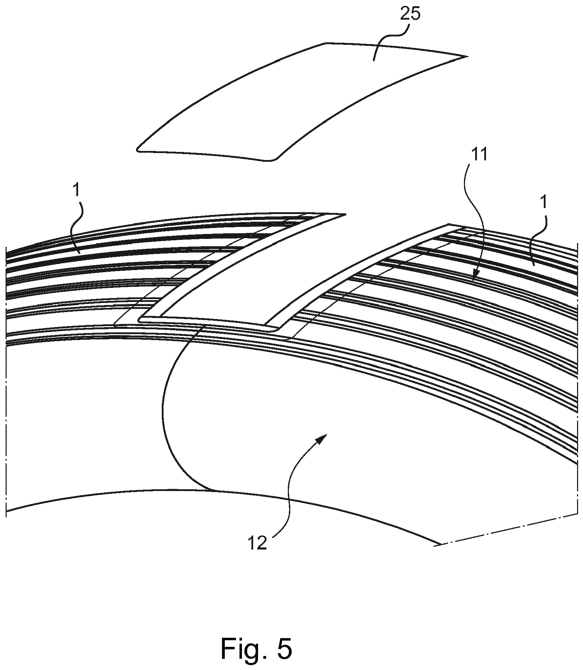

A noter que deux éclisses orbitales 24 peuvent aussi être prévues sur les bords avant et arrière de la trappe 25 (on aperçoit l'éclisse orbitale avant à la figure 5). La trappe 25 présente avantageusement une dimension transversale (le long de cette éclisse orbitale) la plus faible possible pour limiter le nombre d'attaches nécessaires sur l'éclisse orbitale afin d'éviter la formation d'une couture orbitale susceptible d'avoir un impact sur la traînée. Ainsi, la dimension transversale de la trappe 25 est avantageusement très inférieure à sa dimension longitudinale (dimension dans un plan contenant l'axe de l'entrée d'air).

La paroi continue monobloc des secteurs 10 peut être réalisée par moulage d'une nappe d'un matériau composite thermoplastique ou thermodurcissable, tel qu'un carbone thermoplastique ou thermodurcissable utilisé dans le domaine de l'aéronautique (matériau composite à base de fibres de carbone longues et d'une résine thermoplastique ou thermodurcissable à hautes performances).

L'examen des figures suffit pour comprendre que la conception, la fabrication et la réparation d'une entrée d'air selon l'invention sont extrêmement simplifiées par rapport aux entrées d'airs antérieures telles celle illustrée sur la figure 1. En particulier, on constate que chaque secteur monobloc selon l'invention réunit en une seule et même pièce un secteur de la lèvre, un panneau externe et un panneau interne des entrées d'air antérieures.

En outre, dans une entrée d'air selon l'invention, le cadre avant peut être supprimé.

En effet, dans les entrées d'air antérieures connues, le cadre avant remplit deux fonctions : une première fonction structurelle aux fins de rigidification de l'entrée d'air et d'amortissement du choc à l'oiseau et une seconde fonction de dégivrage de l'entrée d'air grâce au conduit à section en D qu'il forme avec les secteurs de lèvre, conduit à section en D qui est alimenté en air chaud provenant du moteur.

La paroi continue monobloc en matériau composite des secteurs monoblocs selon l'invention présente une tenue mécanique améliorée qui permet de se passer du cadre avant, la fonction d'amortissement du choc à l'oiseau pouvant alors être assumée par le cadre arrière.

En cas de suppression du cadre avant, la fonction de dégivrage peut être remplie par des moyens de dégivrage électrique, par exemple en équipant de câbles électriques chauffants la paroi continue monobloc de chaque secteur. En variante, l'entrée d'air comprend, pour chaque secteur monobloc, un élément de cloison inséré dans le secteur monobloc pour former un conduit à section en D avec la portion formant lèvre de la paroi continue monobloc, et l'entrée d'air comporte au moins un tube d'amenée d'un courant d'air chaud dans le conduit à section en D ainsi formé. Contrairement aux éléments de cadre avant des entrées d'air antérieures, cet élément de cloison n'est pas dimensionné pour remplir une fonction structurelle. De même, la fixation entre l'élément de cloison et le secteur monobloc n'a pas vocation à transmettre des efforts importants, ni à amortir le choc à l'oiseau. L'élément de cloison peut donc être plus léger qu'un élément de cadre avant et être simplement collé à la surface interne du secteur monobloc ou fixé audit secteur par tout moyen approprié n'entraînant pas l'apparition d'une couture orbitale susceptible d'avoir un impact sur la traînée.

L'entrée d'air selon l'invention est plus légère que les entrées d'air antérieures du fait des simplifications apportées à sa structure, ce qui est un avantage important dans le domaine des aéronefs. Elle l'est encore plus si le cadre avant est supprimé.

Par ailleurs, le cadre arrière d'une entrée d'air selon l'invention peut présenter une autre forme que celle illustrée. Par exemple, le cadre arrière peut être incliné de façon à ce que sa circonférence externe (fixée à l'extrémité arrière de la portion formant panneau externe des secteurs monoblocs) soit située plus en aval que sa circonférence interne (fixée à l'extrémité arrière de de la portion formant panneau interne des secteurs monoblocs).

L'invention s'étend à toute variante accessible à l'homme du métier c'est-à-dire entrant dans le cadre délimité par les revendications annexées.

En particulier, pour des raisons de format ou dimensions de tôles ou des moyens de production, et dès lors qu'il garde sa fonction finale monobloc non démontable facilement, chaque secteur peut être en deux parties (une partie comprenant une paroi d'un seul tenant constituant à la fois la portion formant lèvre et la portion formant panneau externe, et une partie correspondant à la portion formant panneau interne du secteur), voire en trois parties (chaque partie correspondant à l'une des portions précédemment définies) indépendantes et fixées entre elles par tout moyen adapté. Dans ce cas, l'impact bénéfique sur la traînée du fait de la suppression de coutures orbitales antérieures n'est pas obtenu mais l'avantage du caractère monobloc des secteurs reste entier en termes de simplification et de réduction des coûts des opérations de maintenance.

## Revendications

1. Entrée d'air de nacelle d'aéronef comprenant des secteurs (1) et des jonctions entre les secteurs, chaque secteur comprenant une portion (12) formant lèvre, une portion (13) formant panneau interne et une portion (11) formant panneau externe, l'entrée d'air étant **caractérisée en ce que** :
- les secteurs sont fixés entre eux par des fixations démontables accessibles depuis l'intérieur des secteurs,
- à au moins une jonction entre deux secteurs, une ouverture d'accès est prévue entre les portions formant panneau externe (11) desdits secteurs,
- chaque ouverture d'accès est comblée par une trappe (25) amovible qui présente une face externe affleurant et prolongeant la face externe des portions formant panneau externe (11) des deux secteurs qui délimitent l'ouverture d'accès.

2. Entrée d'air selon la revendication 1, **caractérisée en ce qu'**une ouverture d'accès fermée par une trappe (25) est prévue à chaque jonction entre secteurs.

3. Entrée d'air selon la revendication 1, **caractérisée en ce qu'**une ouverture d'accès fermée par une trappe (25) est prévue à une jonction sur deux de l'entrée d'air.

4. Entrée d'air selon l'une des revendications 1 à 3, **caractérisée** en ce la portion formant lèvre (12) et la portion formant panneau interne (13) de chaque secteur (1) présentent des bords longitudinaux opposés qui sont pourvus de brides de fixation latérales (14) s'étendant radialement vers l'intérieur du secteur, lesquelles brides de fixation latérales (14) sont percées de trous de réception (20) d'attaches (21) pour la fixation dudit secteur à deux secteurs (1) adjacents.

5. Entrée d'air selon l'une des revendications 1 à 4, **caractérisée en ce qu'**elle comprend entre deux et douze secteurs (1).

6. Entrée d'air selon l'une des revendications 1 à 5, **caractérisée en ce que** chaque trappe est fixée de façon amovible aux portions formant panneaux externes des deux secteurs adjacents qui entourent la trappe à l'aide d'éclisses s'étendant à cheval sous lesdites portions formant panneaux externes et sous ladite trappe.

7. Entrée d'air selon l'une des revendications 1 à 5, **caractérisée en ce que** chaque bord longitudinal ou transversal délimitant une ouverture d'accès présente un rebord aminci sur lequel vient reposer la trappe (25) fermant ladite ouverture.

8. Entrée d'air selon l'une des revendications 1 à 7, **caractérisée** en ce les secteurs (1) comportent chacun une paroi continue (10) d'un seul tenant dans laquelle sont formées la portion formant panneau externe (11) et la portion formant lèvre (12) du secteur.

9. Entrée d'air selon la revendication 8, **caractérisée en ce que** la portion formant panneau interne (13) de chaque secteur (1) comporte une peau arrière et un doublage acoustique, et **en ce que** la paroi continue (10) du secteur (1), qui constitue la portion formant panneau externe et la portion formant lèvre, se prolonge pour former également ladite peau arrière.

10. Entrée d'air selon l'une des revendications 1 à 9, **caractérisée en ce que** la paroi continue monobloc (10) des secteurs (1) comprend au moins une zone en un matériau thermoplastique et/ou une zone en un matériau thermodurcissable.

11. Entrée d'air selon la revendication 10, **caractérisée en ce que** la paroi continue monobloc (1) des secteurs comprend au moins une zone en carbone thermoplastique.

12. Nacelle d'aéronef **caractérisée en ce qu'**elle comprend une entrée d'air (30) selon l'une des revendications précédentes.

13. Ensemble propulsif pour aéronef, **caractérisé en ce qu'**il comprend une nacelle selon la revendication 12.

14. Aéronef, **caractérisé en ce qu'**il comprend une nacelle selon la revendication 12.

15. Procédé de maintenance d'une entrée d'air selon l'une des revendications 1 à 11 ayant subi un dommage sur une zone de l'un de ses secteurs, **caractérisé en ce que** :
- le secteur endommagé est intégralement déposé,
- un secteur neuf ou recyclé est installé en lieu et place du secteur endommagé précédemment retiré.
- le secteur endommagé est ultérieurement réparé ou détruit alors que l'aéronef est remis en service.
